# EUROPEAN PATENT SPECIFICATION

(11) **EP 0 895 963 B1**
(45) Date of publication and mention of the grant of the patent: **19.09.2001**
(21) Application number: 97830412.9
(22) Date of filing: 05.08.1997
(51) Int. Cl.: C01B 17/34

(54) **Process for the production of sodium polysulphides in anhydrous alcoholic solution**
Verfahren zur Herstellung von Natriumpolysulfiden in einer wasserfreien alkoholischen Lösung
Procédé de production de polysulfures de sodium dans une solution alcoolique anhydre

(43) Date of publication of application: 10.02.1999
(73) Proprietor: Cambria, Flavio, 20121 Milano (IT)
(72) Inventor: Cambria, Flavio, 20121 Milano (IT)
(74) Representative: Perani, Aurelio

(56) References cited:
- US-A- 2 838 374
- DATABASE WPI Section Ch, Week 9226 Derwent Publications Ltd., London, GB; Class E34, AN 92-214183 XP002047521 & JP 04 144 904 A (SANKYO KASEI KK) , 19 May 1992

## Description

The present invention relates, in its most general aspect, to a process for the production of sodium polysulphides in alcoholic solution.

In particular, the present invention relates to a process for the preparation of an anhydrous alcoholic solution of sodium tetrasulphide (Na₂S₄).

It is known that, among sodium polysulphides, the tetrasulphide is of great importance from the commercial point of view by virtue of its various industrial applications, for example in the treatment of leather and hides and in the rubber production industry.

In particular, sodium tetrasulphide is used in the rubber production industry to introduce the S₄ group into organic molecules.

One important example of this use is represented by the reaction used for the production of organosilanes having an S₄ bridge, in which sodium tetrasulphide is reacted with chlorosilanes according to the following scheme:

2 (RO)₃Si-(CH₂)ₙ-Cl + Na₂S₄ = (RO)₃Si-(CH₂)ₙ-S₄-(CH₂)ₙ-Si(RO)₃ + 2 NaCl

This reaction is generally carried out by mixing together the anhydrous reagents in an alcoholic solvent and under an inert atmosphere, for which it is necessary to have available anhydrous sodium tetrasulphide or an anhydrous alcoholic solution thereof.

In the prior art, anhydrous sodium polysulphides, and in particular sodium tetrasulphide, may be obtained by many different processes.

In one of these processes, the abovementioned polysulphides are prepared by reaction between the elements sodium and sulphur, which are mixed together in suitable amounts under an inert atmosphere, as reported, for example, in German patent DE 3,436,698.

However, it is known that the reaction between sodium and sulphur is extremely exothermic (enthalpy of formation at 25°C for Na₂S: ΔH = -389.1 kJ/mol, and for crystalline Na₂S₄: ΔH = -412 kJ/mol), as a result of which the industrial use of this reaction for the preparation of sodium polysulphides or monosulphide is often difficult and hazardous.

In the German patent DE 3,436,698, the abovementioned reaction is carried out at rigorously controlled temperatures (about 300°C) and so as firstly to disperse one of the two reagents in a certain amount of molten mass of a polysulphide formed beforehand and having a given sodium/sulphur ratio, after which the other reagent is added to the reaction mixture in an amount which is suitable to obtain the desired polysulphide.

Moreover, on account of the high reaction temperature and the corrosion of the equipment caused by the molten polysulphide and the sodium, it is necessary to use specific reactors whose internal parts (walls, stirrer, etc.) in contact with the reaction mixture are coated with special alloys.

In another process of the prior art, an anhydrous alcoholic solution of the desired sodium polysulphide is prepared by reaction between sulphur and anhydrous sodium sulphide in an alcoholic solvent.

The anhydrous sodium sulphide used is generally obtained industrially or by means of direct reaction between sodium and sulphur under an inert atmosphere, as reported, for example, in German patent DE 3,913,259, or by dehydration of sodium sulphide hydrate under vacuum, as reported, for example, in European patent EP 0,361,998.

Patent DE 3,913,259 describes a process for the preparation of anhydrous sodium sulphide from the elements, in which solid sulphur or sulphur in the molten state is gradually added, under an inert atmosphere, to a given amount of sodium placed in a reactor which is preheated to a temperature of 100-150°C.

However, in this case also, it is necessary to control the reaction temperature vigorously and this process suffers from the same drawbacks mentioned above for the preparation of sodium polysulphides according to patent DE 3,436,698.

The processes examined above also use starting materials such as anhydrous sodium sulphide, anhydrous sodium polysulphide and sodium metal, which are expensive, highly hygroscopic, corrosive, hazardous and difficult to handle.

Thus, the use of these starting materials makes it necessary to take special, often expensive, precautions in order to minimize the operational safety risks in production plants and their environmental impact.

On the other hand, European patent EP 0,361,998 describes a process for the preparation of anhydrous sodium sulphide by dehydrating a sodium sulphide hydrate in two stages which are carried out under suitably selected temperature and pressure conditions.

This process has the drawback of being rather expensive since the dehydration stages often require long periods and very low operating pressures.

In another process of the prior art, an anhydrous alcoholic solution of a sodium polysulphide is prepared "in situ" by firstly preparing a sodium alkoxide by reaction of the alcohol - which also acts as solvent - with sodium, after which the abovementioned alkoxide is reacted with hydrogen sulphide by preparing sodium sulphide or hydrosulphide and, lastly, the sodium polysulphide in solution is obtained by reacting the sodium sulphide or hydrosulphide with sulphur.

However, this process has the drawback of using expensive, corrosive and hazardous starting materials such as sodium and hydrogen sulphide, which make it necessary to use special corrosion-resistant materials for production plants and, often expensive, techniques for minimizing the risks associated with the operational safety and the environmental impact. US patent no. 2,838,374 discloses a process for the production of pure anhydrous sodium sulphide free from iron which comprises the steps of heating the melt obtained by reduction of sodium sulfate with carbon and which contains impurities resulting from the reduction process, with an alcohol, filtering the sodium sulfide solution solution thereby formed and recovering the sodium sulfide from the said solution by evaporating the alcohol.

The problem which underlies the present invention is to make available a process for the preparation of anhydrous alcoholic solutions of sodium polysulphides which makes it possible to overcome the drawbacks of the processes mentioned above with reference to the prior art, that is to say a simple process which provides for the use of economic starting materials, mild reaction conditions and inexpensive production plants.

The concept for solving this technical problem is to use an anhydrous sodium sulphide obtained by a simple and economic preparation process for the production of sodium polysulphides in anhydrous alcoholic solution.

On the basis of this concept, the abovementioned technical problem is solved by a process for the preparation of anhydrous alcoholic solutions of sodium polysulphides which comprises the stages of:
a/- preparing an anhydrous alcoholic solution of sodium sulphide by adding a predetermined amount of an anhydrous crude sodium sulphide with a known titer of Na₂S, obtained from the reduction of sodium sulphate, to a preestablished volume of an anhydrous alcoholic solvent;
b/- adding a stoichiometric amount of sulphur to the said anhydrous alcoholic solution,
c/- reacting the said anhydrous crude sodium sulphide with the sulphur, thus obtaining an anhydrous alcoholic solution of sodium polysulphide.
d/- separating out insoluble impurities from the abovementioned alcoholic solution by means of filtration or decantation.
the insoluble impurities present in the crude anhydrous sodium sulphate solution may be separated out before adding the sulphur to the abovementioned solution, or they may be separated out only at the end of the process, by filtering or decanting the final sodium polysulphide solution.

The sodium polysulphides in anhydrous alcoholic solution prepared by the process according to the invention may be chosen from the group comprising Na₂S₂, Na₂S₃, Na₂S₄ and Na₂S₅.

The alcoholic solvent used is chosen from the group comprising methanol, ethanol, isobutanol and ethylene glycol.

In particular, the process according to the invention is conveniently used for the preparation of anhydrous solutions of sodium polysulphides in methanol or ethanol.

The crude sodium sulphide used in the process according to the invention is conveniently prepared by reduction of sodium sulphate with carbon according to the following reaction scheme:

Na₂SO₄ + 2C = Na₂S + 2CO₂

This reaction is carried out in an oven at temperatures of 900-1000°C and gives rise to an impure anhydrous sodium sulphide known as black ash, in a yield of about 75 %.

The reaction impurities consist essentially of sodium sulphate, sodium carbonate, sodium sulphite and sodium thiosulphate, which are themselves also present in anhydrous form.

However, it has been found, surprisingly, that the black ash sodium sulphide prepared by the abovementioned reaction is particularly suitable for the preparation of anhydrous alcoholic solutions of sodium polysulphides.

Moreover, it has been observed that the alcoholic solutions of this sulphide react with sulphur to give the desired polysulphide rapidly and virtually quantitatively.

As mentioned above, the black ash sodium sulphide is obtained in anhydrous form and in the presence of impurities which are also anhydrous, by reduction of sodium sulphate with carbon.

These impurities, in particular sodium carbonate and sulphate, make the abovementioned sulphide less hygroscopic and less flammable than the anhydrous sodium sulphide obtained by the processes of the prior art and it is therefore easier to handle.

In addition, the abovementioned reaction impurities are insoluble in the alcohols used for the preparation of the polysulphides and also carry out a beneficial dehydrating action during the dissolution of the sodium sulphide in alcohol.

It is thus possible to obtain an anhydrous alcoholic solution of sodium sulphide by adding black ash sodium sulphide to a predetermined volume of an alcohol and separating out the insoluble impurities by filtering or decanting the solution.

The black ash sodium sulphide is conveniently dissolved in the alcoholic solvent at a temperature of between room temperature and the boiling point of the alcoholic solvent chosen.

Preferably, this dissolution takes place at a temperature of between 40°C and 50°C.

The maximum concentration of sodium sulphide in the alcoholic solution which may be obtained by the process according to the invention depends essentially on the solubility of this salt in the alcohol chosen.

Thus, for example, solutions containing upto 9 % by volume of sodium sulphide in ethanol and upto 15 % by volume of sodium sulphide in methanol may be obtained.

Sodium sulphide in alcoholic solution freed of the insoluble impurities is subsequently used for the preparation of the desired polysulphide by reaction with a stoichiometric amount of sulphur.

This reaction is conveniently carried out at a controlled temperature of between room temperature and the boiling point of the alcoholic solvent chosen.

Preferably, the abovementioned reaction takes place at a temperature of between 40°C and 50°C.

Suspensions of black ash sodium sulphide obtained by adding an amount of sulphide which is greater than that required to obtain a saturated solution, to a predetermined volume of an alcohol, may also be used in the process according to the invention.

In this way, more concentrated anhydrous alcoholic solutions of sodium polysulphides may be prepared by exploiting the solubility of polysulphides in alcohols which is higher than that of sodium sulphide.

Thus, after preparing the suspension, the reaction with sulphur is first carried out in order to form the desired polysulphide as described above, after which the insoluble impurities are separated out by filtration or decantation.

It is thus possible, by means of the process according to the invention, to obtain anhydrous alcoholic solutions of sodium polysulphides at the desired concentration merely by taking into account the solubility limits of the polysulphides in the alcoholic solvents chosen.

These solutions also have a reduced content of residual impurities, which are kept within limits such as to enable the said solutions to be applied in industrial processes which use sodium polysulphides in alcoholic solution.

The process according to the invention also has the advantage of using economic starting materials that are easy to handle, such as sodium sulphate and carbon, mild reaction conditions and simple, inexpensive production plants which do not require the use of special equipment.

To carry out the process according to the invention industrially, it suffices to have available two simple reactors, the first used to prepare the anhydrous alcoholic solution of the black ash sodium sulphide and the second for the subsequent reaction with sulphur.

If, on the other hand, a suspension of black ash sodium sulphide as a saturated alcoholic solution is used, the production operations may even be condensed into a single reactor.

The characteristics and advantages of the process according to the invention will emerge more clearly from the preparation examples, given by way of non limiting guide, which follow.

### Example 1

### Preparation of a solution of sodium tetrasulphide (Na₂S₄) in anhydrous ethanol

900 ml of anhydrous ethanol were poured into a 1000 ml three-necked round-bottomed flask equipped with a thermometer, a condenser and a stirrer, and 120 g of black ash sodium sulphide containing 72 % Na₂S, suitably ground so as to have an average particle size of 0.5 mm, were added thereto.

The dissolution reaction was exothermic and the temperature of the solution thus obtained was brought to 45°C.

This solution was kept stirring for 60 minutes at a temperature of between 45°C and 50°C, after which it was left to cool to room temperature and the insoluble impurities were separated out by filtration.

The titer thus obtained for the solution of sodium sulphide in ethanol was 8.3 % w/v of Na₂S.

900 ml of the abovementioned anhydrous alcoholic solution of sodium sulphide at a concentration of 8.3 % by volume were poured into a second 1000 ml three-necked flask equipped as described above and 92 g of sulphur were added to the solution.

The reaction was completed by stirring the bulk for a further 20 minutes at 45°C.

A light-red solution having the following characteristics was obtained:
Na₂S₄ titer: 17.5 % w/v; 19.2 % w/w
1 ppm Fe, 0.2 ppm Ni
Formula of the polysulphide: Na₂S_{4.03}
Density: 0.91 g/ml

### Example 2

### Preparation of a solution of sodium disulphide (Na₂S₂) in anhydrous ethanol

The same process described in Example 1 was repeated, except that 900 ml of sodium sulphide solution in ethanol containing 8.3 % of Na₂S by volume were poured into the second flask, to which were added 32 g of sulphur.

A light-pink solution having the following characteristics was obtained:
Na₂S₂ titer: 11.5 % by volume; 12.7 % by weight
0.5 ppm Fe, 0.2 ppm Ni
Density: 0.88

### Example 3

### Preparation of a solution of sodium pentasulphide (Na₂S₅) in anhydrous ethanol

The same process described in Example 1 was repeated, except that 900 ml of sodium sulphide solution containing 8.3 % of Na₂S by volume were poured into the second flask, to which were added 123 g of sulphur.

A dark-red solution having the following characteristics was obtained:
Na₂S₅ titer: 19.90 % by volume; 20.7 % by weight
1 ppm Fe, 0.5 ppm Ni
Formula of the polysulphide: Na₂S_{4.9}
Density: 0.96

### Example 4

### Preparation of a solution of sodium tetrasulphide in methanol

900 ml of anhydrous methanol were poured into a 1000 ml three-necked round-bottomed flask equipped as described in Example 1, and 185 g of black ash sodium sulphide containing 72 % Na₂S were added thereto.

The dissolution reaction was exothermic and the temperature of the solution thus obtained was brought to 50°C.

This solution was kept stirring for 60 minutes at the temperature of 50°C, it was then left to cool to room temperature and the insoluble impurities were separated out by filtration.

The titer of the sodium sulphide solution thus obtained was 13.9 % of Na₂S by volume.

900 ml of the abovementioned anhydrous alcoholic solution of Na₂S at a concentration of 13.9 % in volume were poured into a second 1000 ml three-necked round-bottomed flask equipped as described in Example 1, to which were added 154 g of sulphur.

The reaction was completed by stirring the bulk for a further 15 minutes at 45°C.

A red solution having the following composition was obtained:
Na₂S₄ titer: 27.3 % by volume, 26 % by weight
1 ppm Fe, 0.5 ppm Ni
Density: 1.05

## Claims

1. Process for the preparation of anhydrous alcoholic solutions of sodium polysulphides, comprising the stages of:
a) preparing an anhydrous alcoholic solution of sodium sulphide by adding a predetermined amount of an anhydrous crude sodium sulphide with a known titer of Na₂S, obtained from the reduction of sodium sulphate, to a preestablished volume of an anhydrous alcoholic solvent,
b) adding a stoichiometric amount of sulphur to the said anhydrous alcoholic solution,
c) reacting the said anhydrous crude sodium sulphide with the sulphur, thus obtaining an anhydrous alcoholic solution of sodium polysulphides,
d) separating out the insoluble impurities by filtering or decanting the said anhydrous alcoholic solution of sodium polysulphides.

2. Process according to Claim 1, **characterized in that** the said anhydrous crude sodium sulphide is "black ash" sodium sulphide obtained by reduction of sodium sulphate with carbon.

3. Process according to any one of the preceding claims, **characterized in that** the said stage of preparation of the anhydrous alcoholic solution of sodium sulphide is carried out at a temperature of between room temperature and the boiling point of the said alcoholic solvent.

4. Process according to Claim 3, **characterized in that** the said stage of preparation of the anhydrous alcoholic solution of sodium sulphide is carried out at a temperature of between 40° and 50°C.

5. Process according to any one of the preceding claims, **characterized in that** the reaction of the said stage c) is carried out at a temperature of between room temperature and the boiling point of said solvent.

6. Process according to any one of the preceding claims, **characterized in that** the reaction of the said stage c) is carried out at a temperature of between 40° and 50°C.

7. Process according to any one of the preceding claims, in which the sodium polysulphide in alcoholic solution to be prepared is chosen from the group comprising Na₂S₂, Na₂S₃, Na₂S₄ and Na₂S₅.

8. Process according to any one of the preceding claims, in which the alcoholic solvent used is chosen from the group comprising methanol, ethanol, isobutanol and ethylene glycol.

9. Process according to Claims 7 or 8, in which the sodium polysulphide in alcoholic solution to be prepared is Na₂S₄ and the alcoholic solvent is methanol or ethanol.

## Patentansprüche

1. Verfahren zur Herstellung wasserfreier alkoholischer Lösungen von Natriumpolysulfiden, umfassend die Stufen:
a) Herstellen einer wasserfreien alkoholischen Lösung von Natriumsulfid durch Zugabe einer vorbestimmten Menge eines bei der Reduktion von Natriumsulfat erhaltenen, wasserfreien, rohen Natriumsulfids mit einem bekannten Na₂S-Titer zu einem vorher ermittelten Volumen eines wasserfreien alkoholischen Lösemittels,
b) Zugeben einer stöchiometrischen Menge Schwefel zu der wasserfreien alkoholischen Lösung,
c) Umsetzen des wasserfreien rohen Natriumsulfids mit dem Schwefel, wodurch eine wasserfreie alkoholische Lösung von Natriumpolysulfiden erhalten wird,
d) Abtrennen der unlöslichen Verunreinigungen durch Filtrieren oder Dekantieren der wasserfreien, alkoholischen Lösung von Natriumpolysulfiden.

2. Verfahren gemäß Anspruch 1, **dadurch gekennzeichnet, dass** das wasserfreie rohe Natriumsulfid durch Reduktion von Natriumsulfat mit Kohle erhaltenes "Black-ash"-Natriumsulfid ist.

3. Verfahren gemäß einem der vorhergehenden Ansprüche, **dadurch gekennzeichnet, dass** die Stufe der Herstellung der wasserfreien alkoholischen Lösung von Natriumsulfid bei einer Temperatur zwischen Raumtemperatur und dem Siedepunkt des alkoholischen Lösemittels durchgeführt wird.

4. Verfahren gemäß Anspruch 3, **dadurch gekennzeichnet, dass** die Stufe der Herstellung der wasserfreien alkoholischen Lösung von Natriumsulfid bei einer Temperatur zwischen 40 und 50 °C durchgeführt wird.

5. Verfahren gemäß einem der vorhergehenden Ansprüche, **dadurch gekennzeichnet, dass** die Umsetzung der Stufe c) bei einer Temperatur zwischen Raumtemperatur und dem Siedepunkt des Lösemittels durchgeführt wird.

6. Verfahren gemäß einem der vorhergehenden Ansprüche, **dadurch gekennzeichnet, dass** das Umsetzen der Stufe c) bei einer Temperatur zwischen 40 und 50 °C durchgeführt wird.

7. Verfahren gemäß einem der vorhergehenden Ansprüche, bei dem das herzustellende Natriumpolysulfid in alkoholischer Lösung aus der Na₂S₂, Na₂S₃, Na₂S₄ und Na₂S₅ umfassenden Gruppe ausgewählt ist.

8. Verfahren gemäß einem der vorhergehenden Ansprüche, bei dem das verwendete alkoholische Lösemittel aus der Methanol, Ethanol, Isobutanol und Ethylenglykol umfassenden Gruppe gewählt ist.

9. Verfahren gemäß Anspruch 7 oder 8, bei dem das herzustellende Natriumpolysulfid in alkoholischer Lösung Na₂S₄ und das alkoholische Lösemittel Methanol oder Ethanol ist.

## Revendications

1. Procédé de préparation de solutions alcooliques anhydres de polysulfures de sodium, comprenant les étapes de :
a) préparation d'une solution alcoolique anhydre de sulfure de sodium par addition d'une quantité prédéterminée d'un sulfure de sodium brut anhydre ayant un titre connu de Na₂S, obtenu par réduction du sulfate de sodium, à un volume préétabli d'un solvant alcoolique anhydre ;
b) addition d'une quantité stoechiométrique de soufre à ladite solution alcoolique anhydre,
c) réaction dudit sulfure de sodium brut anhydre avec le soufre pour obtenir une solution alcoolique anhydre de polysulfures de sodium,
d) séparation des impuretés insolubles par filtration ou décantation de ladite solution alcoolique anhydre de polysulfures de sodium.

2. Procédé selon la revendication 1, **caractérisé en ce que** ledit sulfure de sodium brut anhydre est du sulfure de sodium de type "cendre noire" obtenu par réduction du sulfate de sodium avec le carbone.

3. Procédé selon l'une quelconque des revendications précédentes, **caractérisé en ce que** ladite étape de préparation de la solution alcoolique anhydre de sulfure de sodium est réalisée à une température située entre la température ambiante et le point d'ébullition dudit solvant alcoolique.

4. Procédé selon la revendication 3, **caractérisé en ce que** ladite étape de préparation de la solution alcoolique anhydre de sulfure de sodium est réalisée à une température située entre 40° et 50°C.

5. Procédé selon l'une quelconque des revendications précédentes, **caractérisé en ce que** la réaction de ladite étape c) est conduite à une température située entre la température ambiante et le point d'ébullition dudit solvant.

6. Procédé selon l'une quelconque des revendications précédentes, **caractérisé en ce que** la réaction de ladite étape c) est conduite à une température située entre 40° et 50°C.

7. Procédé selon l'une quelconque des revendications précédentes, où le polysulfure de sodium en solution alcoolique qui doit être préparé est choisi dans le groupe comprenant Na₂S₂, Na₂S₃, Na₂S₄ et Na₂S₅.

8. Procédé selon l'une quelconque des revendications précédentes, où le solvant alcoolique utilisé est choisi dans le groupe comprenant le méthanol, l'éthanol, l'isobutanol et l'éthylèneglycol.

9. Procédé selon la revendication 7 ou 8, où le polysulfure de sodium en solution alcoolique qui doit être préparé est Na₂S₄ et le solvant alcoolique est le méthanol ou l'éthanol.
